(19) **Europäisches Patentamt European Patent Office Office européen des brevets**

(11) **EP 1 803 304 B1**

(12) **FASCICULE DE BREVET EUROPEEN**

(45) Date de publication et mention de la délivrance du brevet:
**10.12.2008 Bulletin 2008/50**

(21) Numéro de dépôt: **05809225.5**

(22) Date de dépôt: **14.10.2005**

(51) Int Cl.:
*H04N 13/00* (2006.01)    *G02B 27/22* (2006.01)

(86) Numéro de dépôt international:
**PCT/FR2005/002562**

(87) Numéro de publication internationale:
**WO 2006/042953 (27.04.2006 Gazette 2006/17)**

(54) **DISPOSITIF ET PROCÉDÉ DE VISUALISATION AUTOSTÉRÉOSCOPIQUE À BASE DE LENTICULAIRE, ET PROCÉDÉ DE SYNTHÈSE D'IMAGES AUTOSTÉRÉOSCOPIQUES ASSOCIÉ**

LINSENFÖRMIGE AUTOSTEREOSKOPISCHE ANZEIGE UND VERFAHREN UND DAZUGEHÖRIGES AUTOSTEREOSKOPISCHES BILDSYNTHESEVERFAHREN

LENTICULAR AUTOSTEREOSCOPIC DISPLAY AND METHOD AND ASSOCIATED AUTOSTEROSCOPIC IMAGE SYNTHESISING METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.10.2004  FR 0411018**

(43) Date de publication de la demande:
**04.07.2007  Bulletin 2007/27**

(73) Titulaire: **Artistic Images**
**75016 Paris (FR)**

(72) Inventeurs:
• **LEVECQ, Xavier**
  **F-91190 Gif sur Yvette (FR)**
• **AZOULAY, Armand**
  **F-75016 Paris (FR)**

(74) Mandataire: **Bentz, Jean-Paul et al**
**Novagraaf Technologies**
**122 Rue Edouard Vaillant**
**92593 Levallois-Perret Cedex (FR)**

(56) Documents cités:
EP-A- 0 791 847          WO-A-20/04043079
WO-A-20/04081863       US-B1- 6 801 243

**EP 1 803 304 B1**

## Description

La présente invention concerne un dispositif de visualisation autostéréoscopique à base de lenticulaire. Elle vise également un procédé de visualisation autostéréoscopique mis en oeuvre dans ce dispositif, ainsi qu'un procédé de synthèse d'images autostéréoscopiques associé.

Le domaine de l'invention est plus particulièrement celui des écrans d'ordinateur et de téléviseur tridimensionnels en couleur, destinés par exemple à la diffusion de messages publicitaires ou d'information du public ou à la visualisation de contenus informatifs ou de divertissement.

On connaît déjà des dispositifs de visualisation autostéréoscopique sans lunette mettant en oeuvre, soit des technologies de barrière de parallaxe, soit des technologies lenticulaires. Un écran de visualisation autostéréoscopique comprend globalement :

- un écran électronique bidimensionnel, de technologie à cristaux liquides (LCD) ou à plasmas, diffusant un contenu préalablement codé, et
- un écran de conversion 2D-3D, disposé à faible distance de l'écran bidimensionnel et fonctionnant en transmission, cet écran pouvant être soit du type à barrière de parallaxe, soit du type lenticulaire.

Les barrières de parallaxe sont simples de mise en oeuvre, de fabrication peu coûteuse, mais constituent un obstacle à de trop nombreux photons, surtout lorsque l'on souhaite coder de nombreux angles de vues. Ainsi, la transmission d'un masque d'un écran autostéréoscopique peut se trouver inférieure à 10%. Il en résulte des problèmes de flux photonique et de luminosité de l'écran.

Les écrans autostéréoscopiques qui mettent en oeuvre des réseaux lenticulaires, présentent très peu de pertes en photon et ont donc une transmission proche de 100%, mais sont de fabrication plus coûteuse et plus délicats à mettre en oeuvre.

Les écrans autostéréoscopiques couleur à base de lenticulaire actuels présentent cependant un problème de perte de résolution en horizontal en fonction du nombre de points de vue. La résolution est globalement divisée par le nombre d'angles de vue.

Le problème posé est alors de trouver une façon appropriée de coder les P points de vue sur l'écran électronique 2D pour uniformiser la perte de résolution en horizontal et en vertical, tout en conservant le codage des couleurs RGB (Red Green Blue) ou RVB (Rouge Vert Bleu). L'effet stéréoscopique doit nécessairement être un effet horizontal du fait de la morphologie des yeux. Donc, le codage de la stéréoscopie doit nécessairement être horizontal.

Le document WO0010332 divulgue ainsi un codage en horizontal sur une ligne. Le codage de la couleur est aussi effectué en horizontal sur une ligne, avec une couleur différente par pixel 3D (lenticule) successif. Il en résulte que les lenticules sont verticaux, mais la perte de résolution est uniquement sur l'axe horizontal. Ce qui a pour conséquence que l'image pour chaque prise de vue est très dissymétrique. Par exemple, si l'on considère un écran 2D de dimensions en pixels 1200x768 et si l'on code 8 images, la résolution pour chaque vue est alors 150x768, ce qui représente une perte significative en résolution sur l'image globale.

Par ailleurs, les couleurs codant un pixel 3D sont très éloignées les unes des autres, avec 2 fois le pas du lenticule pour coder les trois couleurs. On obtient alors une fusion des couleurs qui n'est pas très bonne sur la rétine, si l'on souhaite beaucoup d'angles de vue.

Dans l'écran autostéréoscopique divulgué dans le document EP0791847B1, on effectue un codage des vues globalement en horizontal, mais aussi en vertical sur 3 lignes de pixels écran au minimum. La surface de codage de la couleur est au moins égale à une fois la taille du lenticule (en horizontal) par 3 pixels écran (en vertical). La perte en résolution est homogène en horizontal et en vertical. Toutefois, si un tel codage apparaît approprié pour des écrans 2D dans lesquels l'espacement entre les pixels - et entre les cellules de couleurs des pixels -, est important, comme dans le cas de certains écrans LCD, en revanche, il ne peut pas convenir de façon satisfaisante pour des écrans plasma dans lesquels les cellules sont très proches, voire quasi jointes, ce qui conduirait à un mélange important des images des différentes vues entre elles.

Le but de la présente invention est de proposer un dispositif de visualisation autostéréoscopique couleur à base de lenticulaire qui procure une meilleure résolution que les dispositifs actuels et qui soit particulièrement adapté à des équipements autostéréoscopiques à faible nombre de points de vue, typiquement inférieur à 8.

Cet objectif est atteint avec un dispositif de visualisation autostéréoscopique comprenant un écran de visualisation matriciel, et un réseau lenticulaire disposé devant ledit écran de visualisation et présentant un axe lenticulaire incliné par rapport à un axe vertical dudit écran de visualisation, ce réseau lenticulaire étant agencé pour recevoir et traiter optiquement une image matricielle émise par ledit écran de visualisation, ladite image matricielle étant codée pour intégrer une pluralité P de points de vue d'une même scène, ledit écran de visualisation comprenant une matrice de pixels écran comprenant chacun trois cellules de couleur, lesdites cellules de couleur étant organisées en rangées et colonnes et agencées de façon à constituer au sein dudit écran des colonnes d'une même couleur (R, V, B).

Suivant l'invention, l'image émise par l'écran de visualisation (2) est constituée par un ensemble de pixels tridimensionnels (P3D) intégrant chacun la pluralité **P** de points de vue d'un pixel image de ladite scène, chaque pixel tridimensionnel (P3D) occupant au sein dudit écran **3 x P** cellules de couleur sur deux rangées adjacentes.

On entend ici par image une scène que l'on représente en relief. Pour ce faire, une pluralité P de points de vue de cette image est nécessaire. Un pixel image correspond aux P points de vue d'un pixel de la scène.

Avec un dispositif de visualisation selon l'invention, il devient ainsi possible d'uniformiser la perte de résolution dans les deux dimensions horizontale et verticale de l'écran. Ainsi, pour 4 points de vue, la perte de résolution, d'un facteur 2, est la même en horizontal et en vertical. Pour des nombres de points de vue plus élevés (par exemple 5 ou 7), on atteint un rapport de la perte de résolution en horizontal sur la perte de résolution en vertical égal à 1,25 (5 points de vue) et à 1,75 (7 points de vue), ce qui est sans commune mesure avec les rapports de perte de résolution constatés dans les dispositifs autostéréoscopiques de l'art antérieur.

En effet, contrairement aux techniques de codage mises en oeuvre dans les dispositifs de l'art antérieur, dans la présente invention, on réalise un découplage partiel entre d'une part le problème de la stéréoscopie qui doit nécessairement être traitée dans la dimension horizontale et celui du codage couleur qui est ici traitée sur deux rangées selon un axe de codage qui est précisément celui du réseau lenticulaire.

Chaque pixel tridimensionnel (P3D) du dispositif de visualisation selon l'invention peut utiliser dans l'une des deux rangées adjacentes, **2 x P** cellules de couleur adjacentes et, dans l'autre rangée, **P** cellules de couleur adjacentes.

Les pixels tridimensionnels sont agencés de sorte que deux pixels tridimensionnels adjacents horizontalement sont imbriqués.

Le réseau lenticulaire est constitué de lenticules cylindriques parallèles avec un pas lenticulaire et une inclinaison telles que chaque pixel tridimensionnel est sensiblement couvert par deux lenticules élémentaire adjacents.

L'angle d'inclinaison α est de préférence choisi tel que **tan** α est sensiblement égal au rapport de la largeur (CCh) d'une cellule de couleur sur la hauteur (CCv) de ladite cellule de couleur.

Dans une forme particulière de mise en oeuvre de l'invention, chaque point de vue au sein de chaque pixel tridimensionnel est codé :

- dans une première cellule d'une première couleur, située dans une première rangée,
- dans une seconde cellule d'une seconde couleur, située dans ladite première rangée et décalée d'un nombre **P** de cellules par rapport à ladite première cellule, et
- dans une troisième cellule d'une troisième couleur, située dans une seconde rangée adjacente à ladite première rangée, ladite troisième cellule étant décalée horizontalement d'une cellule par rapport à ladite première cellule.

Le nombre **P** de points de vue pour un dispositif de visualisation autostéréoscopique selon l'invention est de préférence choisi parmi 2, 4, 5 ou 7.

Le dispositif de visualisation autostéréoscopique selon l'invention peut avantageusement inclure un écran plasma, mais aussi un écran de technologique LCD ou de toute autre technologie matricielle.

Suivant un autre aspect de l'invention, il est proposé un procédé de visualisation autostéréoscopique, mis en oeuvre pour un dispositif de visualisation autostéréoscopique selon l'invention, comprenant :

- une visualisation d'une image préalablement codée à partir d'une image acquise ou collectée selon une pluralité **P** de points de vue, par un écran de visualisation bidimensionnel, et
- une réception et un traitement optique de ladite image visualisée, par un réseau lenticulaire disposé devant ledit écran de visualisation et présentant un axe lenticulaire incliné par rapport à un axe vertical dudit écran de visualisation, de façon à générer à distance une image tridimensionnelle, ladite image matricielle étant codée pour intégrer la pluralité P de points de vue de ladite image,

caractérisé en ce que le traitement optique réalisé par le réseau lenticulaire est agencé pour traiter une image codée constituée par un ensemble de pixels tridimensionnels (P3D) intégrant chacun la pluralité P de points de vue d'un pixel image de ladite scène, chaque pixel tridimensionnel (P3D) occupant au sein dudit écran **3 x P** cellules de couleur sur deux rangées adjacentes.

Suivant encore un autre aspect de l'invention, il est proposé un procédé pour synthétiser une image autostéréoscopique couleur, mis en oeuvre pour alimenter en contenu image un dispositif de visualisation selon l'invention, comprenant, à partir d'une pluralité **P** d'images numériques préalablement acquises ou calculées chacune sous la forme d'une matrice de pixels image représentant une scène, une synthèse d'une matrice de visualisation codée constituée d'un assemblage de pixels tridimensionnels intégrant chacun la pluralité **P** de points de vue d'un pixel image de ladite scène, chaque pixel tridimensionnel occupant au sein de l'écran **3 x P** cellules de couleur sur deux rangées adjacentes.

D'autres avantages et caractéristiques de l'invention apparaîtront à l'examen de la description détaillée d'un mode de mise en oeuvre nullement limitatif, et des dessins annexés sur lesquels :

- la figure 1 est une vue synoptique d'un dispositif de visualisation autostéréoscopique selon l'invention,
- les figures 2A, 2B, 2C et 2D illustrent la structure interne d'une image codée traitée pour le dispositif de visualisation autostéréoscopique selon l'invention, pour des nombres de point de vue respectivement égaux à 2, 4, 5, et 7,et
- la figure 3 illustrant les étapes principales du procédé de synthèse d'image selon l'invention.

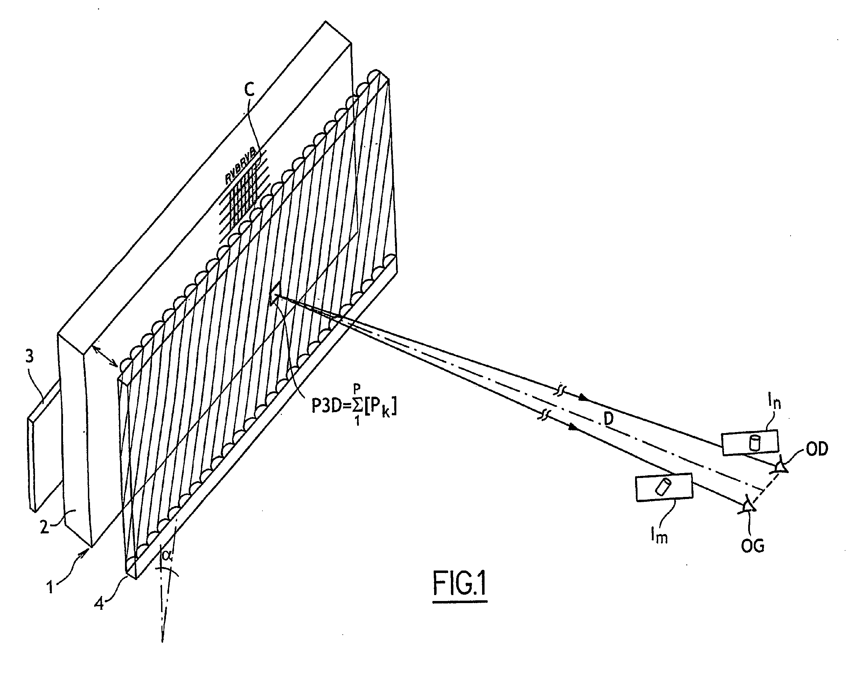

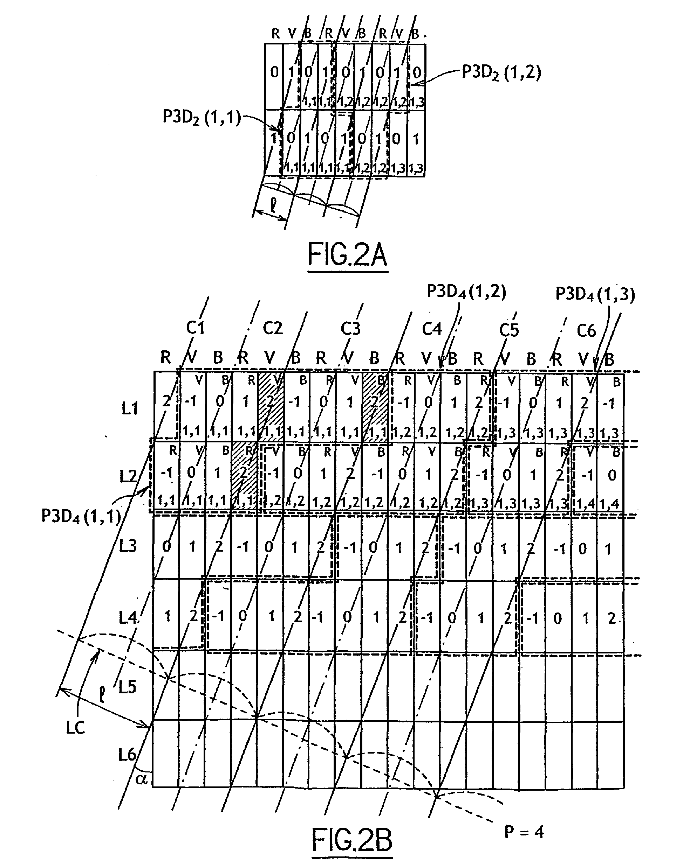

On va tout d'abord décrire, en référence à la figure 1 et aux figures 2A à 2D, un exemple de dispositif de visualisation autostéréoscopique selon l'invention.

Le dispositif de visualisation autostéréoscopique 1 comprend un écran plasma 2 relié à un module électronique 3 de génération d'images codées, et un filtre lenticulaire 4 sous la forme d'un réseau de lentilles cylindriques parallèles et inclinées d'un angle $\alpha$ par rapport à l'axe vertical de l'écran plasma, ce filtre lenticulaire 4 étant disposé devant l'écran plasma à une distance sensiblement égale à la longueur focale F1 des lentilles, qui dans un exemple concret de réalisation est de 9 mm, tandis que chaque cellule de couleur de l'écran de visualisation présente une largeur de 286 $\mu$m.

Le dispositif de visualisation autostéréoscopique 1 selon l'invention est prévu pour fournir un affichage de messages publicitaires ou d'information à une distance D suffisamment grande de l'écran, par exemple à une distance supérieure à 2 m, de sorte que chaque oeil OG, OD d'un spectateur reçoive des images optiques distinctes Im, In fournies par le réseau lenticulaire 4 et que par effet stéréoscopique ce spectateur perçoive une image tridimensionnelle.

La distance focale f des lentilles cylindriques dépend de la distance optimale désirée. Il faut, à cette distance optimale, que deux images successives - codées par deux cellules de couleur successives - soient séparées de la distance moyenne Dy entre deux yeux, par exemple de 65 mm. La distance focale f des lentilles peut être déterminée en fonction de la largeur CCh d'une cellule de couleur et de la distance optimale Dopt, par la formule :

$$f = CCh \cdot Dopt / Dy \approx 9 \text{ mm}$$

Si par exemple la distance optimale Dopt souhaitée est de 2 m, et la largeur CCh est égale à 286 $\mu$m, la distance focale f est alors d'environ 9 mm.

La largeur 1 du lenticule dépend notamment de la distance optimale désirée. En effet, lorsque le spectateur est à la distance optimale (distance finie), la distance séparant deux points de l'écran bidimensionnel vus simultanément par un oeil du spectateur à travers deux lentilles cylindriques successives n'est pas exactement égale à la distance horizontale séparant les axes des lentilles cylindriques. La relation de proportionnalité est égale à Dopt/(Dopt + f).

La largeur 1 de chaque élément lenticulaire peut ainsi être déterminée à partir de la formule suivante :

$$l = \cos \alpha.P. \ CCh. \ Dopt \ /(Dopt+f)$$

Si par exemple la distance optimale Dopt souhaitée est de 2 m, la largeur et la hauteur d'une cellule de couleur CCh sont égales respectivement à 286 $\mu$m et 808 $\mu$m, la focale est égale à 9 mm, le nombre P de points de vue est égal à 4, la largeur 1 du lenticule est alors de 1,074 mm environ.

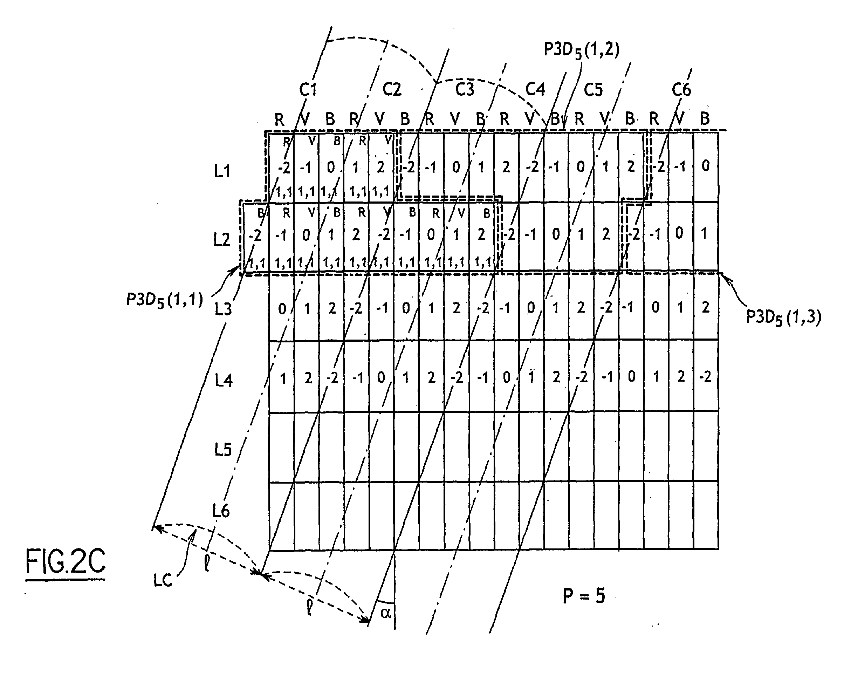

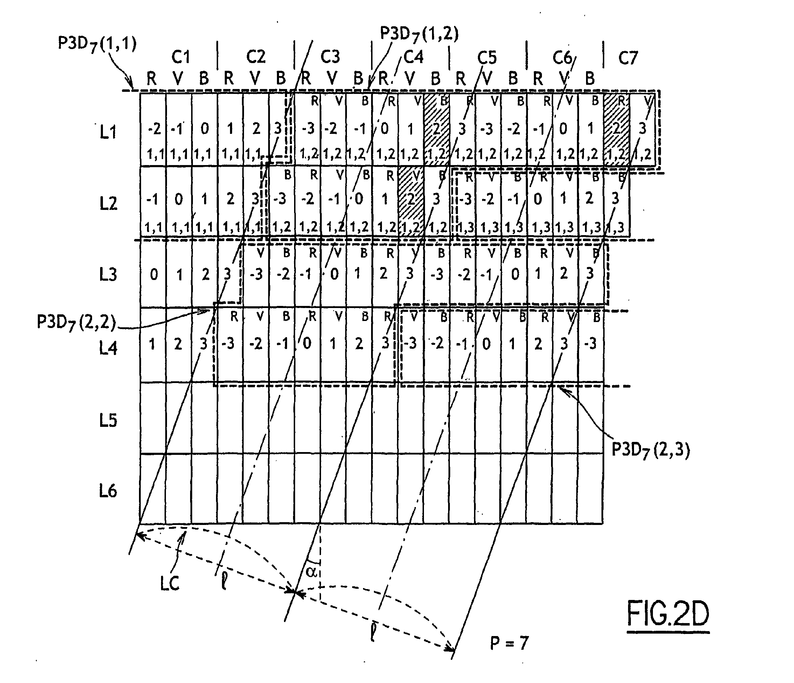

L'écran plasma est constitué, en référence aux figures 2A, 2B et 2C, d'une matrice de cellules élémentaires, comportant des rangées de pixels - en figure 2, L1-L6 - et des colonnes de pixel C1-C6 - en figure 2, C1-C6-, chaque colonne de pixels comprenant trois colonnes de cellules de couleurs R V B. Chaque cellule présente, à titre d'exemple non limitatif, une hauteur CCv et une largeur CCh. Les colonnes de la matrice de visualisation sont successivement des colonnes de cellules de couleur Rouge, Vertes et Bleu.

A titre d'exemple, pour un écran de technologie plasma actuellement disponible dans le commerce, tel que l'écran PIONEER de référence PDP50MXE1, correspondant à une matrice de 768x1280 pixels, chaque cellule a une hauteur CCv égale à 808 $\mu$m et une largeur CCh de 286 $\mu$m.

Dans un premier exemple de réalisation illustré par la figure 2A et correspondant à une configuration à deux points de vue, un pixel tridimensionnel $P3D_2(1,1)$ est constitué, sur une première rangée inférieure, de quatre cellules de couleur successives V, B, R, V sur lesquelles sont codés respectivement les points de vue $0_{1,1}$, $1_{1,1}$, $0_{11}$, $1_{1,1}$, et sur une deuxième rangée supérieure, de deux cellules de couleur B, R sur lesquelles sont codés respectivement les points de vue $0_{1,1}$ et $1_{1,1}$. Le pixel tridimensionnel $P3D_2(1,2)$ présente une structure inversée en tête bêche par rapport à celle du pixel $P3D_2(1,1)$. Chaque pixel tridimensionnel est couvert par deux lentilles cylindriques LC dont le pas lenticulaire 1 est défini de telle sorte que **l/cos**$\alpha$ est égal à 2 fois le produit de la largeur d'une cellule de couleur par le rapport Dopt/(Dopt+f).. La perte en résolution est d'un facteur 2 en vertical et d'un facteur 1 en horizontal.

Dans un second exemple de réalisation illustré par la figure 2B et correspondant à une configuration à 4 points de vue, chaque pixel tridimensionnel occupe 12 cellules de couleur sur deux rangées : 8 cellules dans une rangée et 4 cellules dans une rangée adjacente. Ainsi, le pixel tridimensionnel P3D$_4$(1,2) comporte quatre cellules dans la rangée L1 codées chacune selon un point de vue (-1, 0, 1, 2) et huit cellules dans la rangée L2 représentant deux fois une succession de cellules codées selon les quatre points de vue. Chaque pixel tridimensionnel est couvert par deux lentilles cylindriques LC dont le pas lenticulaire 1 est défini de telle sorte que **l/cos**α est égal à 4 fois le produit de la largeur d'une cellule de couleur par le rapport Dopt/(Dopt+f).

Chaque point de vue d'un pixel tridimensionnel est codé sur trois cellules non adjacentes. Ainsi, le pixel image 2$_{1,2}$ est codé sur une cellule R en rangée d'écran L2 et colonne d'écran C2, une cellule V en rangée d'écran L1 et colonne d'écran C2, et une cellule B en rangée d'écran L1 et en colonne d'écran C3.

Les pixels tridimensionnels adjacents horizontalement sont imbriqués et de structure géométrique inversée. La perte de résolution résultant de cette configuration à 4 points de vue est d'un facteur 2 en vertical et en horizontal.

Dans un troisième exemple de réalisation illustré par la figure 2C et correspondant à une configuration à 5 points de vue, chaque pixel tridimensionnel occupe 15 cellules sur deux rangées : 10 cellules sur une première rangée, correspondant à deux fois une suite de 5 cellules codant chacun des 5 points de vue (-2, -1, 0, 1, 2), et 5 cellules sur une rangée adjacente, correspondant à une suite de 5 cellules codant les 5 points de vue. Ainsi, à titre d'exemple non limitatif, le pixel tridimensionnel P3D$_5$(1,2) comprend sur la rangée L1 dix cellules codant successivement les points de vue (-2, -1, 0, 1, 2, -2, -1, 0, 1, 2) sur les couleurs (B, R, V, B, R, V, B, R, V, B) et sur la rangée L2 cinq cellules codant successivement les points de vue (-2, -1, 0, 1, 2) sur les couleurs (R, V, B, R, V).

Chaque pixel tridimensionnel est couvert par deux lentilles cylindriques LC dont le pas lenticulaire 1 est défini de telle sorte que **l/cos**α est égal à 5 fois le produit de la largeur d'une cellule de couleur par le rapport Dopt/(Dopt+f).

Dans cette configuration à 5 points de vue, deux pixels tridimensionnels utilisent dix pixels d'écran. La perte en résolution est d'un facteur 2,5 en horizontal et d'un facteur 2 en vertical.

Dans un quatrième exemple de réalisation illustré par la figure 2D et correspondant à une configuration à 7 points de vue, chaque pixel tridimensionnel occupe 21 cellules sur deux rangées : 14 cellules sur une première rangée, correspondant à deux fois une suite de 7 cellules codant chacun des 7 points de vue (-3, -2, -1, 0, 1, 2, 3), et 7 cellules sur une rangée adjacente, correspondant à une suite de 7 cellules codant les 7 points de vue.

Un point de vue donné, pour chaque pixel image, est codé, au sein d'un pixel tridimensionnel, sur trois cellules de couleur réparties en deux cellules sur une rangée et une cellule sur une rangée adjacente. Par exemple, le pixel image 2$_{1,2}$ est codé sur une cellule V en rangée d'écran L2 et colonne d'écran C4, une cellule B en rangée d'écran L1 et colonne d'écran C4, et une cellule R en rangée d'écran L1 et colonne d'écran C7.

Comme dans les configurations précédentes à 2, 4 et 5 points de vue, les pixels tridimensionnels adjacents sont tous imbriqués horizontalement. Dans cette configuration à 7 points de vue, 2 pixels tridimensionnels utilisent 14 pixels d'écran. La perte en résolution est d'un facteur 3,5 en horizontal et d'un facteur 2 en vertical.

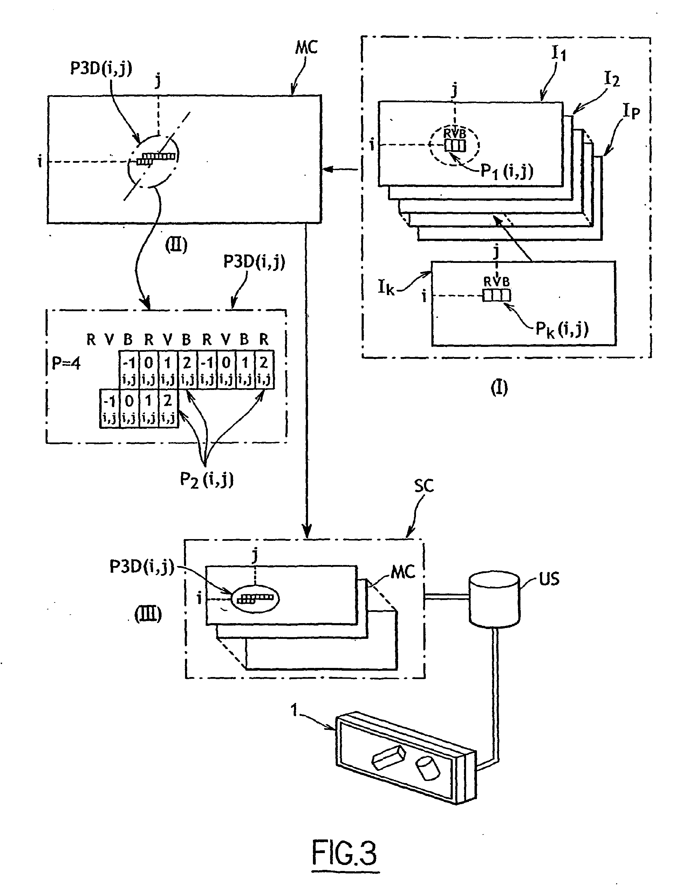

On va maintenant décrire, en référence à la figure 3, un exemple d'implémentation d'un procédé de synthèse d'images autostéréoscopiques selon l'invention, ces images étant destinées à alimenter un dispositif de visualisation autostéréoscopique selon l'invention.

On considère tout d'abord une phase préalable (I) d'obtention d'images numériques selon une pluralité P de points de vue, par exemple au nombre de 4, choisis de manière appropriée pour procurer un effet stéréoscopique. Ces P images numériques peuvent être soit synthétisées, soit collectées à partir de sites distants ou de banques d'images, soit encore acquises par des prises de vue.

Chacune de ces images numériques I$_1$, I$_2$,..,I$_K$,..., I$_P$ est constituée, pour chaque point de vue, d'une matrice de pixels image, chacun de ces pixels image P$_1$(i,j),..,P$_K$(i,j) contenant trois informations de couleur R V B.

Une seconde phase (II) du procédé de synthèse consiste à construire une matrice de visualisation MC en élaborant, pour chaque point image (i,j) des points de vue, un pixel 3D, référencé P3D(i,j) en figure 3, à partir de l'agrégation des 4 points de vue du pixel image, avec le mode de codage spécifique à l'invention, à savoir un codage combiné horizontalement et verticalement de chaque pixel de codage P$_1$(i,j),...P$_K$(i,j) pour réaliser un pixel tridimensionnel P3D(i,j). A titre d'exemple, dans ce pixel tridimensionnel, le pixel image P$_2$(i,j) contribue à une cellule V en rangée inférieure et à deux cellules B et R en rangée supérieure.

Dans une troisième phase (III), les matrices de visualisation MC correspondant chacune à une image d'une séquence codée SC, sont ensuite stockées dans une unité de stockage d'images US prévue pour être sollicitée en réponse à une requête émanant d'un processeur de commande d'un dispositif de visualisation autostéréoscopique 1 selon l'invention.

Bien sûr, l'invention n'est pas limitée aux exemples qui viennent d'être décrits et de nombreux aménagements peuvent être apportés à ces exemples sans sortir du cadre de l'invention. En particulier, l'invention n'est pas limitée au seul cas d'un écran plasma mais peut être mise en oeuvre avec d'autres types d'écran de structure matricielle, à cellules jointives ou espacées.

On peut également envisager d'associer, pour un même écran, le mode de codage spécifique mis en oeuvre dans le procédé de visualisation selon l'invention, avec d'autres modes de codage de pixel connus dans l'art antérieur ou qui pourraient être développés dans le futur, chaque mode de codage étant appliqué sur un bloc de rangées déterminé ou variable de l'écran.

Le procédé de synthèse selon l'invention est alors mis en oeuvre uniquement sur une partie des rangées d'un écran de visualisation, les rangées restantes étant soumises à un mode de codage distinct de celui implémenté dans ce procédé.

On peut aussi prévoir que les rangées sur lesquelles le procédé de synthèse selon l'invention est mis en oeuvre soient déterminées dynamiquement en fonction de la scène à visualiser.

L'invention est défini par les revendications suivantes.

## Revendications

1. Dispositif (1) de visualisation autostéréoscopique comprenant un écran de visualisation matriciel (2),et un réseau lenticulaire (4) disposé devant ledit écran de visualisation (2) et présentant un axe lenticulaire incliné par rapport à un axe vertical dudit écran de visualisation (2), ledit réseau lenticulaire (4) étant agencé pour recevoir et traiter optiquement une image matricielle émise par ledit écran de visualisation (2), ladite image matricielle étant codée pour intégrer une pluralité P de points de vue d'une même scène, ledit écran de visualisation comprenant une matrice de pixels écran comprenant chacun trois cellules de couleur, lesdites cellules de couleur étant organisées en rangées et colonnes et agencées de façon à constituer au sein dudit écran des colonnes d'une même couleur (R, V, B), **caractérisé en ce que** l'image émise par l'écran de visualisation (2) est constituée par un ensemble de pixels tridimensionnels (P3D) intégrant chacun la pluralité P de points de vue d'un pixel image de ladite scène, chaque pixel tridimensionnel (P3D) occupant au sein dudit écran 3 x P cellules de couleur sur deux rangées adjacentes,

   **en ce que** chaque pixel tridimensionnel (P3D) occupe, dans l'une desdites deux rangées adjacentes, 2 x P cellules de couleur adjacentes et, dans l'autre rangée, P cellules de couleur adjacentes, et

   **en ce que** le réseau lenticulaire est constitué de lenticules cylindriques parallèles avec un pas lenticulaire et une inclinaison telles que chaque pixel tridimensionnel (P3D) est sensiblement couvert par deux lenticules élémentaires adjacents.

2. Dispositif selon la revendication 1, **caractérisé en ce que** les pixels tridimensionnels sont agencés de sorte que deux pixels tridimensionnels adjacents horizontalement sont imbriqués.

3. Dispositif selon la revendication 1 ou 2, **caractérisé en ce que** le pas lenticulaire 1 et l'angle d'inclinaison a du réseau lenticulaire sont choisis tels que:

$$l= \cos\alpha.P.CCh.Dopt \ /(Dopt+f)$$

   où CCh est la largeur d'une cellule de couleur, Dopt est la distance optimale de visualisation souhaitée, et f est la distance focale du réseau lenticulaire.

4. Dispositif selon la revendication 3, **caractérisé en ce que** l'angle d'inclinaison $\alpha$ est choisi tel que $\tan\alpha$ est sensiblement égal au rapport de la largeur (CCh) d'une cellule de couleur sur la hauteur (CCv) de ladite cellule de couleur.

5. Dispositif selon l'une des revendications précédentes, **caractérisé en ce qu'**au sein de chaque pixel tridimensionnel, chaque point de vue est codé :

   - dans une première cellule d'une première couleur, située dans une première rangée,
   - dans une seconde cellule d'une seconde couleur, située dans ladite première rangée et décalée d'un nombre P de cellules par rapport à ladite première cellule, et
   - dans une troisième cellule d'une troisième couleur, située dans une seconde rangée adjacente à ladite première rangée, ladite troisième cellule étant décalée horizontalement d'une cellule par rapport à ladite première cellule.

6. Dispositif selon l'une des revendications précédentes, **caractérisé en ce que** le nombre P de points de vue est choisi parmi 2, 4, 5 ou 7.

7. Dispositif (1) selon l'une des revendications précédentes, **caractérisé en ce que** l'écran de visualisation électronique (2) est un écran plasma.

8. Dispositif selon l'une des revendications 1 à 6, **caractérisé en ce que** l'écran de visualisation électronique est un écran à cristaux liquides (LCD).

9. Procédé de visualisation autostéréoscopique, mettant en oeuvre un dispositif de visualisation autostéréoscopique (1) selon l'une des revendications précédentes, comprenant:

   - une visualisation d'une image matricielle préalablement codée à partir d'une image acquise ou calculée selon une pluralité (P) de points de vue, par un écran de visualisation bidimensionnel (2), et
   - une réception et un traitement optique de ladite image visualisée, par un réseau lenticulaire (4) disposé devant ledit écran de visualisation (2) et présentant un axe lenticulaire incliné par rapport à un axe vertical dudit écran de visualisation, de façon à générer à distance une image tridimensionnelle (Im, In), ladite image matricielle étant codée pour intégrer une pluralité (P) de points de vue de ladite image,

   **caractérisé en ce que** le traitement optique réalisé par le réseau lenticulaire (4) est agencé pour traiter une image codée constituée par un ensemble de pixels tridimensionnels (P3D) intégrant chacun la pluralité P de points de vue d'un pixel image de ladite scène, chaque pixel tridimensionnel (P3D) occupant au sein dudit écran 3 x P cellules de couleur sur deux rangées adjacentes.

10. Procédé pour synthétiser une image autostéréoscopique couleur, mis en oeuvre pour alimenter en contenu image un dispositif de visualisation (1) selon l'une des revendications 1 à 8, comprenant, à partir d'une pluralité P d'images numériques préalablement acquises ou collectées (I) chacune sous la forme d'une matrice de pixels image représentant une scène, une synthèse (II) d'une matrice de visualisation codée (MC) constituée d'un assemblage de pixels tridimensionnels (P3D) intégrant chacun la pluralité P de points de vue d'un pixel image de ladite scène, chaque pixel tridimensionnel (P3D) occupant au sein de l'écran 3 x P cellules de couleur sur deux rangées adjacentes.

11. Procédé de synthèse selon la revendication 10, **caractérisé en ce qu'**il est mis en oeuvre uniquement sur une partie des rangées d'un écran de visualisation, les rangées restantes étant soumises à un mode de codage distinct de celui implémenté dans ce procédé.

12. Procédé de synthèse selon la revendication 11, **caractérisé en ce que** les rangées sur lesquelles ce procédé est mis en oeuvre sont déterminées dynamiquement en fonction de la scène à visualiser.

**Claims**

1. Autostereoscopic display device (1) comprising a matrix display screen (2), and a lenticular array (4) disposed in front of said display screen (2) and having a lenticular axis inclined with respect to a vertical axis of said display screen (2), said lenticular array (4) being arranged to receive and optically treat a matrix image emitted by said display screen (2), said matrix image being encoded to integrate a plurality P of viewpoints of the same scene, said display screen comprising a matrix of screen pixels each comprising three colour cells, said colour cells being organised in rows and columns and arranged so as to constitute, within said screen, columns of the same colour (R, G, B), **characterised in that** the image emitted by the display screen (2) is constituted by a set of three-dimensional pixels (P3D) each integrating the plurality P of viewpoints of an image pixel of said scene, each three-dimensional pixel (P3D) occupying, within said screen, 3 x P colour cells over two adjacent rows, **in that** each three-dimensional pixel (P3D) occupies, in one of said two adjacent rows, 2 x P adjacent colour cells and, in the other row, P adjacent colour cells, and **in that** the lenticular array consists of parallel cylindrical lenticules with a lenticular pitch and inclination such that each three-dimensional pixel (P3D) is substantially covered by two adjacent elementary lenticules.

2. Device according to Claim 1, **characterised in that** the three-dimensional pixels are arranged so that two horizontally adjacent three-dimensional pixels are overlapping.

3. Device according to Claim 1 or 2, **characterised in that** the lenticular pitch 1 and the angle of inclination $\alpha$ of the lenticular array are chosen such that:

$$l = \cos\alpha.P.CCh.Dopt/(Dopt+f)$$

where CCh is the width of a colour cell, Dopt is the desired optimum display distance, and f is the focal distance of the lenticular array.

4. Device according to Claim 3, **characterised in that** the angle of inclination $\alpha$ is chosen such that $\tan\alpha$ is substantially equal to the ratio of the width (CCh) of a colour cell to the height (CCv) of said colour cell.

5. Device according to one of the preceding claims, **characterised in that**, within each three-dimensional pixel, each viewpoint is encoded:

   - in a first cell of a first colour, situated in a first row;
   - in a second cell of a second colour, situated in said first row and offset by a number P of cells with respect to said first cell; and
   - in a third cell of a third colour, situated in a second row adjacent to said first row, said third cell being offset horizontally by one cell with respect to said first cell.

6. Device according to one of the preceding claims, **characterised in that** the number P of viewpoints is chosen from amongst 2, 4, 5 or 7.

7. Device (1) according to one of the preceding claims, **characterised in that** the electronic display screen (2) is a plasma screen.

8. Device according to one of Claims 1 to 6, **characterised in that** the electronic display screen is a liquid crystal display (LCD).

9. Autostereoscopic display method, using an autostereoscopic display device (1) according to one of the preceding claims, comprising:

   - display of a matrix image previously encoded from an image acquired or calculated according to a plurality (P) of viewpoints, by a two-dimensional display screen (2), and
   - reception and optical treatment of said displayed image, by a lenticular array (4) disposed in front of said display screen (2) and having a lenticular axis inclined with respect to a vertical axis of said display screen, so as to generate at a distance a three-dimensional image (Im, In), said matrix image being encoded to integrate a plurality (P) of viewpoints of said image,

   **characterised in that** the optical treatment carried out by the lenticular array (4) is arranged to treat an encoded image constituted by a set of three-dimensional pixels (P3D) each integrating the plurality P of viewpoints of an image pixel of said scene, each three-dimensional pixel (P3D) occupying, within said screen, 3 x P colour cells over two adjacent rows.

10. Method for synthesising a colour autostereoscopic image, used for supplying image content to a display device (1) according to one of Claims 1 to 8, comprising, from a plurality P of digital images previously acquired or collected (I), each in the form of a matrix of image pixels representing a scene, a synthesis (II) of an encoded display matrix (MC) consisting of an assemblage of three-dimensional pixels (P3D) each integrating the plurality P of viewpoints of an image pixel of said scene, each three-dimensional pixel (P3D) occupying, within the screen, 3 x P colour cells over two adjacent rows.

11. Synthesis method according to Claim 10, **characterised in that** it is used only on some of the rows of a display screen, the remaining rows being subjected to an encoding mode distinct from that implemented in this method.

12. Synthesis method according to Claim 11, **characterised in that** the rows on which this method is used are determined dynamically according to the scene to be displayed.

**Patentansprüche**

1. Autostereoskopische Anzeigevorrichtung (1) mit einem Matrix-Anzeigeschirm (2) und einem Linsenraster (4), das vor dem Anzeigeschirm (2) angeordnet ist und eine Linsenachse aufweist, die in Bezug zu einer Vertikalachse des Anzeigeschirms (2) geneigt ist, wobei das Linsenraster (4) so angeordnet ist, dass dieses ein von dem Anzeigeschirm (2) emittiertes Matrixbild erhält und optisch behandelt, wobei das Matrixbild so codiert ist, dass dieses eine Mehrzahl P von Blickpunkten ein und derselben Szene integriert, wobei der Anzeigeschirm eine Schirmmatrix aus Pixeln aufweist, die jeweils drei Farbzellen umfassen, wobei die Farbzellen in Zeilen und Spalten organisiert sind und so angeordnet sind, dass sie innerhalb des Schirms Spalten ein und derselben Farbe (R, V, B) bilden, **dadurch gekennzeichnet, dass** das von dem Anzeigeschirm (2) emittierte Bild durch eine Gruppe von dreidimensionalen Pixeln (P3D) gebildet ist, die jeweils die Mehrzahl P von Blickpunkten eines Pixelbildes der Szene integrieren, wobei jedes dreidimensionale Pixel (P3D) innerhalb des Schirms 3 x P Farbzellen auf zwei benachbarten Zeilen belegt, dass jedes dreidimensionale Pixel (P3D) in einer der beiden benachbarten Zeilen 2 x P benachbarte Farbzellen und in der anderen Zeile P benachbarte Farbzellen belegt, und dass das Linsenraster aus parallelen zylindrischen Linsen gebildet ist, mit einer solchen Linsenweite und einer solchen Neigung, dass jedes dreidimensionale Pixel (P3D) im Wesentlichen durch zwei benachbarte elementare Linsen abgedeckt ist.

2. Vorrichtung nach Anspruch 1, **dadurch gekennzeichnet, dass** die dreidimensionalen Pixel derart angeordnet sind, dass zwei horizontal benachbarte dreidimensionale Pixel überlappt sind.

3. Vorrichtung nach Anspruch 1 oder 2, **dadurch gekennzeichnet, dass** die Linsenweite 1 und ein Einfallwinkel $\alpha$ des Linsenrasters wie folgt gewählt sind:

$$l = \cos\alpha.P.CCh.Dopt / (Dopt+f)$$

wobei CCh die Größe einer Farbzelle ist, Dopt der erwünschte optimale Visualisierungsabstand ist und f die Brennweite des Linsenrasters ist.

4. Vorrichtung nach Anspruch 3, **dadurch gekennzeichnet, dass** der Einfallwinkel $\alpha$ so gewählt ist, dass $\tan\alpha$ im Wesentlichen gleich der Größe (CCh) einer Farbzelle über die Höhe (CCv) dieser Farbzelle ist.

5. Vorrichtung nach einem der vorhergehenden Ansprüche, **dadurch gekennzeichnet, dass** innerhalb jedes dreidimensionalen Pixels jeder Blickpunkt codiert ist:

   - in einer ersten Zelle in einer ersten Farbe, die in einem ersten Bereich liegt,
   - in einer zweiten Zelle in einer zweiten Farbe, die in dem ersten Bereich liegt und um eine Zahl P von Zellen gegenüber der ersten Zelle verschoben ist, und
   - in einer dritten Zelle in einer dritten Farbe, die in einem zweiten Bereich liegt, der dem ersten Bereich benachbart ist, wobei die dritte Zelle gegenüber der ersten Zelle horizontal verschoben ist.

6. Vorrichtung nach einem der vorhergehenden Ansprüche , **dadurch gekennzeichnet, dass** die Anzahl P von Blickpunkten gewählt ist aus 2, 4, 5 oder 7.

7. Vorrichtung (1) nach einem der vorhergehenden Ansprüche, **dadurch gekennzeichnet, dass** der elektronische Anzeigeschirm (2) ein Plasmaschirm ist.

8. Vorrichtung nach einem der Ansprüche 1 bis 6, **dadurch gekennzeichnet, dass** der elektronische Anzeigeschirm ein Flüssigkristallschirm (LCD) ist.

9. Autostereoskopisches Anzeigeverfahren, das eine autostereoskopische Anzeigevorrichtung (1) nach einem der vorhergehenden Ansprüche verwendet, mit:

   - einer Anzeige eines Matrixbildes, das vorher aus einem aus einer Mehrzahl (P) von Blickpunkten erfassten oder berechneten Bild codiert wurde, durch einen zweidimensionalen Anzeigeschirm (2), und
   - einem Empfang und einer optischen Behandlung des dargestellten Bildes durch ein Linsenraster (4), das vor dem Anzeigeschirm (2) angeordnet ist und eine in Bezug zu einer Vertikalachse des Anzeigeschirms geneigte Linsenachse aufweist, um so auf die Entfernung ein dreidimensionales Bild (Im, In) zu erzeugen, wobei das Matrixbild codiert ist, um eine Mehrzahl (P) von Blickpunkten des Bildes zu integrieren,

**dadurch gekennzeichnet, dass** die durch das Linsenraster (4) ausgeführte optische Behandlung ausgelegt ist, das codierte Bild zu behandeln, das durch eine Gruppe von dreidimensionalen Pixeln (P3D) gebildet wird, die jeweils die Mehrzahl P von Blickpunkten eines Bildpixels der Szene einbeziehen, wobei jedes dreidimensionale Pixel (P3D) innerhalb des Schirms 3 x P Farbzellen über zwei benachbarte Zeilen belegt.

10. Verfahren zum Synthetisieren eines autostereoskopen Farbbildes, das durchgeführt wird, um fortlaufend eine Anzeigevorrichtung (1) nach einem der Ansprüche 1 bis 8 zu versorgen, mit, ausgehend von einer Mehrzahl P von digitalen Bildern, die vorher jeweils in Form einer Matrix von eine Szene wiedergebenden Bildpixeln erfasst oder gesammelt (I) wurden, einer Synthese (II) einer codierten Anzeigematrix (MC), die aus einer Zusammensetzung von dreidimensionalen Pixeln (P3D) gebildet wird, die jeweils die Vielzahl P von Blickpunkten eines Bildpixels der Szene einbeziehen, wobei jedes dreidimensionale Pixel (P3D) innerhalb des Schirms 3 x P Farbzellen über zwei benachbarte Zeilen belegt.

11. Syntheseverfahren nach Anspruch 10, **dadurch gekennzeichnet, dass** dieses nur über einen Teil der Zeilen eines Anzeigeschirms durchgeführt wird, wobei die verbleibenden Bereiche einem unterschiedlichen Codierungsmodus unterzogen werden als demjenigen, der in dieses implementiert ist.

12. Syntheseverfahren nach Anspruch 11, **dadurch gekennzeichnet, dass** die Bereiche, über welche dieses Verfahren durchgeführt wird, dynamisch in Abhängigkeit von der zur visualisierenden Szene bestimmt werden.

FIG.1

FIG.2A

P3D$_2$ (1,2)

P3D$_2$ (1,1)

| R | V | B | R | V | B | R | V | B |
|---|---|---|---|---|---|---|---|---|
| 0 | 1 | 0 | 1 | 0 | 1 | 0 | 1 | 0 |
| 1,1 | 1,1 | 1,1 | 1,2 | 1,2 | 1,2 | 1,2 | 1,3 | |
| 1 | 0 | 1 | 0 | 1 | 0 | 1 | 0 | 1 |
| 1,1 | 1,1 | 1,1 | 1,1 | 1,2 | 1,2 | 1,3 | 1,3 | |

ℓ

FIG.2B

P3D$_4$(1,2)   P3D$_4$(1,3)

C1   C2   C3   C4   C5   C6

P3D$_4$(1,1)

L1, L2, L3, L4, L5, L6

LC

ℓ

α

P = 4

EP 1 803 304 B1

P3D$_5$(1,2)

| | C1 | | | C2 | | | C3 | | | C4 | | | C5 | | | C6 | |
|---|---|---|---|---|---|---|---|---|---|---|---|---|---|---|---|---|---|---|
| | R | V | B | R | V | B | R | V | B | R | V | B | R | V | B | R | V | B |
| L1 | -2 | -1 | 0 | 1 | 2 | -2 | -1 | 0 | 1 | 2 | -2 | -1 | 0 | 1 | 2 | -2 | -1 | 0 |
| L2 | -2 | -1 | 0 | 1 | 2 | -2 | -1 | 0 | 1 | 2 | -2 | -1 | 0 | 1 | 2 | -2 | -1 | 0 | 1 |
| L3 | 0 | 1 | 2 | -2 | -1 | 0 | 1 | 2 | -2 | -1 | 0 | 1 | 2 | -2 | -1 | 0 | 1 | 2 |
| L4 | 1 | 2 | -2 | -1 | 0 | 1 | 2 | -2 | -1 | 0 | 1 | 2 | -2 | -1 | 0 | 1 | 2 | -2 |
| L5 | | | | | | | | | | | | | | | | | | |
| L6 | | | | | | | | | | | | | | | | | | |

P3D$_5$(1,1)

P3D$_5$(1,3)

LC

ℓ

ℓ

α

**FIG.2C**

P = 5

EP 1 803 304 B1

P3D$_7$(1,1)  P3D$_7$(1,2)

|  | C1 | | | C2 | | | C3 | | | C4 | | | C5 | | | C6 | | | C7 | |
|---|---|---|---|---|---|---|---|---|---|---|---|---|---|---|---|---|---|---|---|---|
|  | R | V | B | R | V | B | R | V | B | R | V | B | R | V | B | R | V | B | R | V |
| L1 | -2 | -1 | 0 | 1 | 2 | 3 | -3 | -2 | -1 | 0 | 1 | 2 | 3 | -3 | -2 | -1 | 0 | 1 | 2 | 3 |
| L2 | -1 | 0 | 1 | 2 | 3 | -3 | -2 | -1 | 0 | 1 | 2 | 3 | -3 | -2 | -1 | 0 | 1 | 2 | 3 | |
| L3 | 0 | 1 | 2 | 3 | -3 | -2 | -1 | 0 | 1 | 2 | 3 | -3 | -2 | -1 | 0 | 1 | 2 | 3 | | |
| L4 | 1 | 2 | 3 | -3 | -2 | -1 | 0 | 1 | 2 | 3 | -3 | -2 | -1 | 0 | 1 | 2 | 3 | -3 | | |
| L5 | | | | | | | | | | | | | | | | | | | | |
| L6 | | | | | | | | | | | | | | | | | | | | |

P3D$_7$(2,2)

P3D$_7$(2,3)

LC   $\ell$   $\alpha$   $\ell$   P = 7

**FIG.2D**

FIG.3

**EP 1 803 304 B1**

## RÉFÉRENCES CITÉES DANS LA DESCRIPTION

**Documents brevets cités dans la description**

- WO 0010332 A

- EP 0791847 B1